# EUROPEAN PATENT SPECIFICATION

(11) **EP 1 190 557 B1**
(45) Date of publication and mention of the grant of the patent: **27.11.2002**
(21) Application number: 00946666.5
(22) Date of filing: 28.06.2000
(51) Int. Cl.: H04M 3/42, H04M 11/06

(54) **A DEVICE AND A METHOD FOR ESTABLISHING A DIGITAL TELECOMMUNICATION CONNECTION**
GERÄT UND VERFAHREN ZUM AUFBAUEN EINER DIGITALEN TELEKOMMUNIKATIONSVERBINDUNG
DISPOSITIF ET PROCEDE PERMETTANT D'ETABLIR UNE LIAISON NUMERIQUE DE TELECOMMUNICATIONS

(30) Priority: 02.07.1999 SE 9902549; 20.04.2000 SE 0001474
(43) Date of publication of application: 27.03.2002
(73) Proprietor: Direct2Internet AB, 133 26 Stockholm (SE)
(72) Inventor: CLAESSON, Jens, S-133 37 Saltsjöbaden (SE)
(74) Representative: Wihlsson, Joakim Per Magnus
(86) International application number: SE0001374
(87) International publication number: WO01003354

(56) References cited:
- EP-A2- 0 863 678
- US-A- 5 428 608
- US-A- 5 546 379
- US-A- 5 663 982

## Description

### THE BACKGROUND OF THE INVENTION AND PRIOR ART

The present invention refers to a device for establishing a digital telecommunication connection between a calling party and a called party. The present invention also refers to a method for establishing a digital telecommunication connection between a calling party and a called party.

Such digital telecommunication connections frequently comprises a connecting member in the form of a modem of the calling party, a connecting line via a public switched network, and a connecting member in the form of a modem of the called party. The calling party may be a normal PC to be connected, by a user, to the called party. The called party can be PC or any other computer, an Internet supplier or a gateway to any other public or private network. The connection involves a modem synchronisation by a so-called handshaking between the modems, wherein modem-specific parameters are transferred from the modem of the calling party to the modem of the called party. The synchronisation comprises a frequency modulation for establishing contact between the calling modem and the called modem. Normally, the connecting or handshaking procedure is completed within a time period of about 15-45 seconds. Consequently, the time for connecting a PC to the Internet is considerable. This time period is inconvenient for the user. Furthermore, costs would be saved if the connecting time is reduced, since the time period of using the public switched network would be shortened.

A further time-consuming procedure to be performed to have access to the Internet or any other network is the authentication.

A further problem refers to the fact that a set of modems and connecting adapters is required at the Internet supplier. For each such modem or other connecting adapter a specific, individual telephone number is required. Consequently, the calling party has to have the corresponding knowledge about which specific telephone number of the Internet supplier he is to use. If the calling party replaces his modem by a modem of another type, it therefore might be necessary for him to dial another telephone number to reach the Internet supplier. This causes a lot of trouble for the Internet suppliers.

US-A-5 301 246 discloses a method of accessing a computer facility by the use of Calling Party Directory Number (CPDN). A data communication equipment is provided to store the CPDN of a calling party in a database. Upon receiving a telephone call from the calling party the data communication equipment takes one of a number of courses of action depending on the CPDN of the calling party: answer the telephone call, refuse to answer the telephone call or return the telephone call to the calling party depending on information about the calling party identified by the CPDN. Consequently, the object of the method disclosed in this document is to reduce the accessibility of computer systems to intruders.

WO89/11183 refers to a multi mode modem to be provided at the calling party and for communicating with a variety of modem types employing differing initial hand shake signals.

US-A-5 835 578 discloses a modem which comprises a ring detector arranged to detect the type of a calling modem. Moreover, the modem comprises a controller for configuring a datapump of the modem in accordance with the detected type of modem.

### SUMMARY OF THE INVENTION

The object of the present invention is to reduce the time required for establishing a digital telecommunication connection between a calling party and a called party.

According to the present invention this object is obtained by the device initially defined, which comprises:
a connecting processor having input means arranged to be connected to a connecting member of the calling party and an output connection arranged to connect the connecting processor to the called party, wherein the connecting processor is arranged to identify the calling party by a unique name, to receive a number of parameters required for connection and access to the called party, which are associated with the calling party, and to establish, on basis of the parameters, said connection between the connecting member of the calling party and the called party; and
a database arranged to store the unique name of each individual calling party together with the associated parameters,
wherein the connecting processor is arranged to receive, from the calling party via the input means, a calling signal including an identification signal identifying the calling party on basis of said unique name, and wherein the connecting processor is further arranged to receive, upon said identification of the unique name, the parameters associated with the calling party from the database if the calling party is present in the database, and wherein the parameters include authentication parameters in form of a user-ID and a logon of user of the calling party, which are required to give access to the called party.

By such a device the connection of the connecting member, such as a modem or an ISDN-adapter, of the calling party to the connecting member of the called party is substantially faster when the calling party is stored in the database than according to prior connecting procedures. By storing essentially all parameters required for the connection in a database, these may essentially be available to establish the connection to the called party as soon as the calling party is identified. Including the authentication parameters of the user of the calling party makes it possible to arrange the connecting processor to load the authentication parameters immediately upon said identification of the unique name, and to transfer the authentication parameters to the called party.

According to an embodiment of the invention, the connecting processor may be adaptable to different types of connecting members of the calling party. Hence, a connection may be performed by dialling one single number for each called party, since the connecting processor may includes several connecting units for different types of connecting members of the calling party.

According to a further embodiment of the present invention, the parameters are associated with the connecting member of the calling party. Thereby, the connecting member of the calling party may include a modem. Said number of parameters may include parameters regarding the structure, the function and/or the quality of the connecting member of the calling party. The structure and function of the connecting member varies among different products available on the market. For instance, said numbers of parameters may include at least one of data transmission speed, data compression type and error correction manner of the connecting member of the calling party. Moreover, the parameters may include modem transmission speed, modulation function variables modem manufacturing information, slip/PPP information etc. The connecting processor may be arranged to transfer the authentication parameters during said adapting of the, modem member. Hence, authentication may be performed during the handshaking procedure.

According to a further embodiment of the present invention, the connecting processor includes a modem member and is arranged to adapt the modem member to the modem of the calling party by means of said parameters. The modem member is preferably adaptable to essentially all available types of modems of the calling party. For instance, the modem member may include a set of different modems each being adapted to one or several different types of modems of the calling party. Thereby, the connecting processor may be arranged to select a proper modem of the modem member in response the parameters loaded from the database and to perform the so-called handshaking procedure.

According to a further embodiment of the present invention, the connecting processor is arranged to receive the parameters associated with the calling party from the calling party if the calling party is not present in the database, and thereby transfer the unique name of the calling party together with the associated parameters to the database. Thus, in case the calling party is not yet present in the database the connection is performed according to previous technique. However, in this case connecting processor will transfer the unique name of the calling party together with the associated parameters to the database, and consequently, at the next call from the calling party, the parameters will be available in the database.

According to an advantageous application of the present invention, the called party includes an Internet supplier. Thus, the time period for connection to an Internet supplier may be substantially reduced, making Internet more attractive to the users.

According to a further embodiment of the present invention, the connecting processor is arranged to receive, from the calling party via the input means, a calling signal including an identification signal identifying the calling party on basis of said unique name, and wherein the connecting processor comprises means arranged to identify the calling party by said identification signal. The input means may be arranged to be connected to the connecting member of the calling party via a network having means for delivering said identification signal. The identification signal may be realised by the so-called Calling Party Directory Number (CPDN) which is provided by public switched networks.

According to the present invention, the object is also obtained by the method initially defined by means of a connecting device having a database for storing a unique name of a calling party together with a number of parameters, which are associated with the calling party, wherein the method comprises the steps of:
receiving by the connecting device a calling signal from the calling party, said signal including the unique name of the calling party;
identifying the calling party by the unique name;
searching the unique name of the calling party in the database;
loading said parameters associated with the calling party; and
establishing said connection between the calling party and the called party by means of the parameters,
wherein the parameters include authentication parameters in form of a user-ID and a logon of the user of the calling party, which are required to give access to the called party.

Preferred embodiments of the method are defined in the dependent claims 15 to 18.

### BRIEF DESCRIPTION OF THE DRAWINGS

The present invention is now to be explained by the description of different embodiments, disclosed by way of example, and with reference to the drawings attached, in which
- Fig 1: discloses schematically a connecting device according to the present invention, and
- Fig 2: discloses a flow chart illustrating a connecting method according to the present invention.

### DETAILED DESCRIPTION OF DIFFERENT EMBODIMENTS

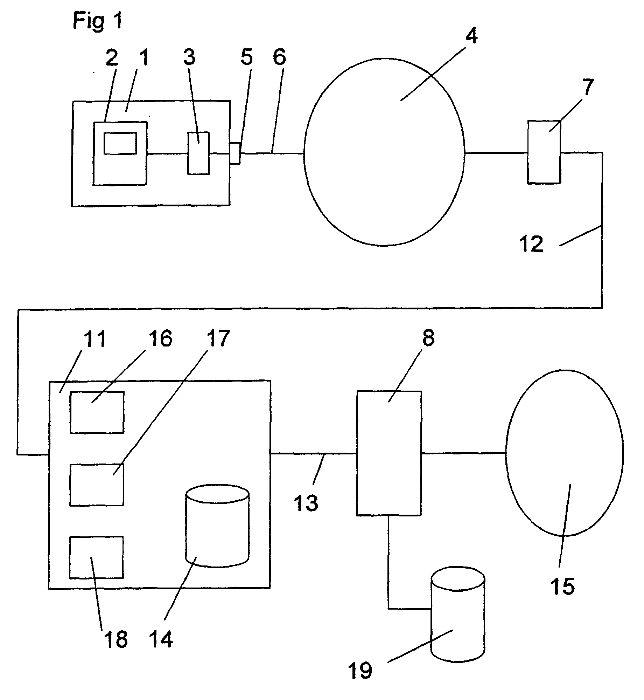

Fig 1 discloses a digital telecommunication arrangement. In Fig 1, a calling party 1 is illustrated by a computer 2, for instance a PC, and a connecting member in the form of a modem 3. The modem 3 may be of any arbitrary type, for instance a V.90, V.34 etc, and of any arbitrary modem manufacturer. The modem 3 is connectable to a public switched network 4 via the telephone jack 5 and a line 6. At the end of the public switched network 4 there is a public switch 7 to which a called party 8 is connected via a connecting line to be explained more closely below. In the embodiment disclosed, the called party 8 is an Internet supplier.

According to the present invention, a connecting processor 11 is provided between the public switch 7 and the called party 8. More specifically, the calling party 8 is connected to the public switch 7 via a first line 12 forming input means to the connecting processor 11, the connecting processor 11 and a second line 13 forming output means from the connecting processor 11. The connecting processor 11 may be realised by a computer having a storing member 14, such as a hard disc or any other suitable computer memory, arranged to store a database. From the called party 8, i.e. the Internet supplier, the Internet 15 is available.

The public switched network 4 and the public switch 7 are arranged to provide a calling signal when the calling party rings the telephone number of the called party 8. The calling signal includes a ring signal and an identification signal forming a unique name of the calling party 1 by which the calling party 1 is identified. The identifying signal may be a so-called Calling Party Directory Number (CPDN) which is normally delivered by public switched networks.

The connecting processor 11 includes identifying means 16, in the form of software, which identifies the calling party 1 by means of the CPDN. Furthermore, the connecting processor 11 comprises receiving means 17 arranged to receive a number of parameters, which are associated with the calling party 1 and which are required for establishing a connecting line between the calling party 1 and the called party 8. These parameters include for instance the type of the modem and the modem transmission speed, such as V.90, V.34 etc, error correction protocol, such as V.42 LAPM, MNP2-4, MNP10, and data compression protocol, such as MNP5, V.42''. The parameters may also include the quality of the line 6. Furthermore, in accordance with the present invention the parameters include authentication parameters, such as the user-ID and the logon of the user of the calling party 1 for entering the called party 8. The parameters received by the receiving means 17 of the connecting processor 11 are stored in the database of the storing member 14 together with the CPDN of the calling party 1. Consequently, upon the next call from the calling party 1, the parameters are already known to the connecting processor 11.

The connecting processor 11 is, in the embodiment disclosed, directly connected to the called party 8 by means of the second line 13, for instance formed by an optical fibre cable. The connecting processor 11 also includes a modem member 18, which is adaptable or configurable to be connected to the modem 3 of the calling party 1. The modems 3 may be of different types, for instance V.90, V.34, or an ISDN-adapter. The modem member 18 may include a set of modem units, each of which being adapted to be connected with one or several modems 3 of different types.

The connecting processor 11 is arrange to perform the hand-shaking procedure between the modem 3 of the calling party and the modem member 18 by means of the parameters stored in the database of the storing member 14.

Furthermore, the connecting processor 11 is arranged to transfer the authentication parameters to the called party substantially immediately upon said identification of the unique name, i.e. during said handshaking procedure or adapting of the modem member 18 to the modem 3. Thereby the authentication may be completed when the hand-shaking procedure is finished. The authentication parameters, e.g. the user-ID and the logon, may be stored in a general database 19, a so-callud RADIUS, which is connected to the called party 8 and which contains the user-ID and the logon of all users having access to the Internet 15 via the called party 8. The authentication parameters are hence loaded from the database 19 by the connecting processor 11 immediately after identification of a calling party 1. In the case that several users are associated with the calling party 1, the connecting processor 11 may be arranged to receive the authentication parameters of all these users. Consequently, authentication for any one of these users may be completed before the handshaking procedure is finished.

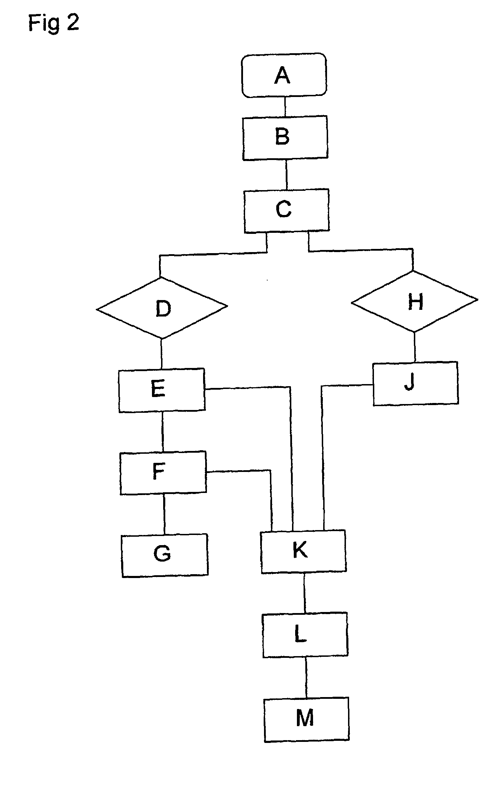

Fig 2 discloses a flow chart illustrating the process of connecting a calling party 1 to the called party 8.

Box A represents the start of the connecting process.

Box B represents the idle mode of the connecting processor 11 during which it is prepared to receive a calling signal from the calling party 1.

Box C represents the identification of the calling party 1 by the CPDN. It is to be noted that the identifying signal may precede the ring signal from the calling party 1, i.e. the public switch 7 knows the identity of the calling party 1 before the calling party 1 dials the ring number.

Box D represents searching in the database of storing member 14 for the CPDN of the calling party 1. If the CPDN of the calling party 1 is found in the database, the parameters of the calling party 1 are loaded from the database.

Box E represents a check if the parameters stored in the database of the storing member 14 are still valid. In case one or more parameters are changed the connecting process continues to box K. If all parameters are still valid the connecting process continues to box G.

Box F represents the adaptation of the modem member 18 to the modem 3, in response to the parameters, for the establishment of a connecting line between the modem 3 of the calling party 1 and the called party 8.

Box G represents the possibility of saving in the database of the storing member 14 any new parameters or other information, which was registered during the connection process.

Box H represents searching in the database 19 for the CPDN of the calling party 1. If the CPDN of the calling party 1 is found in the database 19, the authentication parameters of the calling party 1 are loaded from the database 19.

Box J represents a check if the authentication parameters stored in the database 19 are still valid. In case one or more authentication parameters are changed the connecting process continues to box J. If the authentication parameters are found, the authentication is completed.

Box K represents the establishment of the connection between the user of the calling party 1 and the called party 8.

If the CPDN of the calling party 1 is not found in the database of the storing member 14, the parameters required for the connection is loaded from modem 3 of the calling party 1 according to conventional technique. Thereafter, the connecting line is established as represented by box K.

Box L represents the saving in the database of the storing member 14 of the parameters required for establishing a connecting line between the modem 3 and the called party 8 so that, at the next call from the calling party 1, the parameters may be loaded from the database of the storing member 14.

The present invention is not limited to the embodiments disclosed above but may be modified and varied within the scope of the following claims.

In particular, it is pointed out that the invention is not only applicable to the connection of a modem to a Internet supplier but also to connecting modems of facsimile devices to each other and to other digital equipment. The invention may also be applied to the connecting process involving mobile cellular telephones.

The connecting processor 11 is closely connected to the called party 8 and may form an integrated part of an Internet supplying unit. It is also possible within the scope of the invention to arrange one common connecting processor 11 for more the one called party 8.

Although Fig 1 only discloses one calling party 1 it is of course understood that a great number of calling parties 1 may be included in the connecting arrangement and the connecting processor 11 and the storing member 14 may store and handle the CPDN and the parameters regarding a large number of connecting members 3.

## Claims

1. A device for establishing a digital telecommunication connection between a calling party (1) and a called party (8), the device comprising:
a connecting processor (11) having input means (12) arranged to be connected to a connecting member (3) of the calling party (1) and an output connection (13) arranged to connect the connecting processor to the called party (8), wherein the connecting processor (11) is arranged to identify the calling party (1) by a unique name, to receive a number of parameters required for connection and access to the called party, which are associated with the calling party (1), and to establish, on basis of the parameters, said connection between the connecting member (3) of the calling party and the called party; and
a database (14, 19) arranged to store the unique name of each individual calling party (1) together with the associated parameters,
wherein the connecting processor (11) is arranged to receive, from the calling party (1) via the input means (12), a calling signal including an identification signal identifying the calling party (1) on basis of said unique name, and
the connecting processor (11) is further arranged to receive, upon said identification of the unique name, the parameters associated with the calling party from the database if the calling party is present in the database (14, 19), wherein the parameters include authentication parameters in form of a user-ID and a logon of user of the calling party (1), which are required to give access to the called party (8).

2. A device according to claim 1, wherein the connecting processor (11) is arranged to load the authentication parameters from the database (19) immediately upon said identification of the unique name, and to transfer the authentication parameters to the called party (8).

3. A device according to claim 1, wherein the connecting processor (11) is adaptable to different types of connecting members (3) of the calling party (1).

4. A device according to claim 3, wherein the parameters are associated with the connecting member of the calling party (1).

5. A device according to claim 4, wherein the connecting member (3) of the calling party (1) includes a modem.

6. A device according to claim 5, wherein said number of parameters includes parameters regarding the structure, the function and/or the quality of the connecting member (3) of the calling party (1).

7. A device according to claim 6, wherein said number of parameters includes at least one of data transmission speed, data compression type and error correction manner of the connecting member (3) of the calling party (1).

8. A device according to any one of claims 5 to 7, wherein the connecting processor (11) includes a modem member (18) and is arranged to adapt the modem member (18) to the modem (3) of the calling party (1) on basis of the parameters.

9. A device according to claim 8, wherein the connecting processor (11) is arranged to transfer the authentication parameters during said adapting of the modem member (18).

10. A device according to any one of the preceding claims, wherein the connecting processor (11) is arranged to receive the parameters associated with the calling party from the calling party if the calling party (1) is not present in the database (14), and thereby transfer the unique name of the calling party (1) together with the associated parameters to the database (14, 19).

11. A device according to any one of the preceding claims, wherein the called party (8) includes an Internet supplier (9).

12. A device according to any one of the preceding claims, wherein the connecting processor (11) comprises means (16) arranged to identify the calling party (1) on basis of said identification signal.

13. A device according to any one of the preceding claims, wherein the input means (12) is arranged to be connected to the connecting member (3) of the calling party via a network (4) having means (7) for delivering said identification signal.

14. A method for establishing a digital telecommunication connection between a calling party and a called party by means of a connecting device having a database for storing a unique name of a calling party together with a number of parameters required for connection and access to the called party, which are associated with the calling party, wherein the method comprises the steps of:
receiving by the connecting device a calling signal from the calling party, said signal including the unique name of the calling party;
identifying the calling party by the unique name;
searching the unique name of the calling party in the database;
loading said parameters associated with the calling party; and
establishing said connection between the calling party and the called party by means of the parameters, said establishing includes adapting the connecting device to a connecting member of the calling party (1) by means of the parameters, wherein the parameters include authentication parameters in form of a user-ID and a logon of the user of the calling party, which are required to give access to the called party.

15. A method according to claim 14, including the steps of: loading the authentication parameters from the database immediately upon said identification of the unique name, and transferring the authentication parameters to the called party.

16. A method according to claim 15, wherein the authentication parameters are transferred during said adapting of the connecting device.

17. A method according to any one of claims 14 and 16, including the step of loading said parameters associated with the calling party from the database if the calling party is present in the database.

18. A method according to any one of claims 14 to 17, including the further step of transferring said parameters associated with the calling party from the calling party to the database if the calling party is not present in the database.

## Patentansprüche

1. Vorrichtung zum Einrichten einer digitalen Telekommunikationsverbindung zwischen einem anrufenden Teilnehmer (1) und einem angerufenen Teilnehmer (8), umfassend:
einen Verbindungsprozessor (11) mit einer Eingabeeinrichtung (12), ausgebildet zur Verbindung mit einem Verbindungselement (3) des anrufenden Teilnehmers (1), und einer Ausgangsverbindung (13), ausgebildet zur Verbindung des Verbindungsprozessors mit dem angerufenen Teilnehmer (8), wobei der Verbindungsprozessor (11) dazu ausgebildet ist, den anrufenden Teilnehmer (1) anhand eines eindeutigen Namens zu identifizieren, eine Anzahl von Parametern zu empfangen, die erforderlich sind für die Verbindung mit dem und den Zugriff auf den angerufenen Teilnehmer, und die dem anrufenden Teilnehmer (1) zugeordnet sind, und zum Aufbauen der Verbindung zwischen dem Verbindungselement (3) des anrufenden Teilnehmers und des angerufenen Teilnehmers auf der Basis der Parameter; und
eine Datenbank (14, 19) ausgebildet zur Speicherung des eindeutigen Namens jedes individuellen anrufenden Teilnehmers (1) zusammen mit den dazugehörigen Parametern,
wobei der Verbindungsprozessor (11) dazu ausgebildet ist, von dem anrufenden Teilnehmer (1) über die Eingabeeinrichtung (12) ein Rufsignal zu empfangen, welches ein Kennungssignal enthält, welches den anrufenden Teilnehmer (1) auf der Grundlage des eindeutigen Namens identifiziert, und
der Verbindungsprozessor (11) darüber hinaus derart ausgebildet ist, dass er bei Identifizierung des eindeutigen Namens die dem anrufenden Teilnehmer zugeordneten Parameter aus der Datenbank empfängt, wenn der anrufende Teilnehmer in der Datenbank (14, 19) präsent ist, wobei die Parameter Berechtigungsparameter in Form einer Benutzer-ID und einer Anmeldung des Benutzers des anrufenden Teilnehmers (1) enthält, die erforderlich sind, um den Zugang zu dem angerufenen Teilnehmer (8) zu gewähren.

2. Vorrichtung nach Anspruch 1, bei der der Verbindungsprozessor (11) dazu ausgebildet ist, die Berechtigungsparameter aus der Datenbank (19) unmittelbar nach Identifizierung des eindeutigen Namens zu laden und die Berechtigungsparameter zu dem angerufenen Teilnehmer (8) zu transferieren.

3. Vorrichtung nach Anspruch 1, bei der der Verbindungsprozessor (11) an unterschiedliche Typen von Verbindungselementen (3) des anrufenden Teilnehmers (1) anpaßbar ist.

4. Vorrichtung nach Anspruch 3, bei der die Parameter dem Verbindungselement des anrufenden Teilnehmers (1) zugeordnet sind.

5. Vorrichtung nach Anspruch 4, bei der das Verbindungselement (3) des anrufenden Teilnehmers (1) ein Modem enthält.

6. Vorrichtung nach Anspruch 5, bei der die Anzahl von Parametern Parameter bezüglich des Aufbaus, der Funktion und/oder der Qualität des Verbindungselements (3) des anrufenden Teilnehmers (1) enthält.

7. Vorrichtung nach Anspruch 6, bei der die Anzahl von Parametern mindestens eine folgender Größen enthält: Datenübertragungsgeschwindigkeit, Datenkompressionstyp und Fehlerkorrekturart des Verbindungselements (3) des anrufenden Teilnehmers (1).

8. Vorrichtung nach einem der Ansprüche 5 bis 7, bei der der Verbindungsprozessor (11) ein Modemteil (18) enthält und dazu ausgebildet ist, das Modemteil (18) an das Modem (3) des anrufenden Teilnehmers (1) auf der Grundlage der Parameter anzupassen.

9. Vorrichtung nach Anspruch 8, bei der der Verbindungsprozessor (11) dazu ausgebildet ist, die Berechtigungsparameter während der Anpassung des Modemteils (18) zu transferieren.

10. Vorrichtung nach einem der vorhergehenden Ansprüche, bei der der Verbindungsprozessor (11) dazu ausgebildet ist, die zu dem anrufenden Teilnehmer gehörenden Parameter von dem anrufenden Teilnehmer zu empfangen, wenn der anrufende Teilnehmer (1) nicht in der Datenbank (14) präsent ist, um dadurch den eindeutigen Namen des anrufenden Teilnehmers (1) zusammen mit den dazugehörigen Parameter in die Datenbank (14, 19), zu transferieren.

11. Vorrichtung nach einem der vorhergehenden Ansprüche, bei der der angerufene Teilnehmer (8) einen Internet-Anbieter (9) enthält.

12. Vorrichtung nach einem der vorhergehenden Ansprüche, bei der der Verbindungsprozessor (11) eine Einrichtung (16) enthält, die zum Identifizieren des anrufenden Teilnehmers (1) auf der Grundlage des Kennungssignals ausgebildet ist.

13. Vorrichtung nach einem der vorhergehenden Ansprüche, bei der die Eingabeeinrichtung (12) dazu ausgebildet ist, mit dem Verbindungselement (3) des anrufenden Teilnehmers über ein Netzwerk (4) verbunden zu werden, welches eine Einrichtung (7) zum Bereitstellen des Kennungssignals enthält.

14. Verfahren zum Aufbauen einer digitalen Telekommunikationsverbindung zwischen einem anrufenden Teilnehmer und einem angerufenen Teilnehmer mit Hilfe einer Verbindungsvorrichtung, die eine Datenbank zum Speichern eines eindeutigen Namens eines anrufenden Teilnehmers zusammen mit einer Anzahl von Parametern auffaßt, die erforderlich sind für die Verbindung mit dem und den Zugriff auf den angerufenen Teilnehmer, wobei die Parameter zu dem anrufenden Teilnehmer gehören, umfassend folgende Schritte:
von der Verbindungsvorrichtung wird ein Anrufsignal von dem anrufenden Teilnehmer empfangen, wobei das Signal den eindeutigen Namen des anrufenden Teilnehmers enthält;
der anrufende Teilnehmer wird anhand des eindeutigen Namens identifiziert;
der eindeutige Name des anrufenden Teilnehmers wird in der Datenbank gesucht;
die zu dem anrufenden Teilnehmer gehörigen Parameter werden geladen; und
es wird die Verbindung zwischen dem anrufenden Teilnehmer und dem angerufenen Teilnehmer mit Hilfe der Parameter aufgebaut, wobei dieses Aufbauen das Anpassen der Verbindungsvorrichtung an ein Verbindungselement des anrufenden Teilnehmers (1) mit Hilfe der Parameter beinhaltet, wobei die Parameter Berechtigungsparameter in Form einer Benutzer-ID und einer Anmeldung des Benutzers des anrufenden Teilnehmers enthalten, die erforderlich sind für den Zugang zu dem angerufenen Teilnehmer.

15. Verfahren nach Anspruch 14, umfassend folgende Schritte: Laden der Berechtigungsparameter aus der Datenbank unmittelbar nach Identifizierung des eindeutigen Namens, und Transferieren der Berechtigungsparameter zu dem angerufenen Teilnehmer.

16. Verfahren nach Anspruch 15, bei dem die Berechtigungsparameter während der Anpassung der Verbindungsvorrichtung transferiert werden.

17. Verfahren nach Anspruch 14 oder 16, umfassend den Schritt des Ladens der Parameter, die zu dem anrufenden Teilnehmer gehören, aus der Datenbank , wenn der anrufende Teilnehmer in der Datenbank präsent ist.

18. Verfahren nach einem der Ansprüche 14 bis 17, enthaltend den weiteren Schritt des Transferierens der zu dem anrufenden Teilnehmer gehörigen Parameter von dem anrufenden Teilnehmer zu der Datenbank, wenn der anrufende Teilnehmer nicht in der Datenbank präsent ist.

## Revendications

1. Dispositif pour établir une liaison de télécommunication numérique entre un appelant (1), et un appelé (8), le dispositif comprenant :
un processeur de connexion (11) ayant un système d'entrée (12) prévu pour être connecté à un élément de connexion (3) de l'appelant (1) et une connexion de sortie (13) prévue pour connecter le processeur de connexion à l'appelé (8), **caractérisé en ce que** le processeur de connexion (11) est prévu pour identifier l'appelant (1) par un nom unique, recevoir un certain nombre de paramètres nécessaires pour la connexion et l'accès à l'appelé, qui sont associés à l'appelant (1), et établir, sur la base des paramètres, ladite connexion entre l'élément de connexion (3) de l'appelant et l'appelé ; et
une base de données (14, 19) prévue pour mémoriser le nom unique de chaque appelant individuel (1) avec les paramètres associés,
**caractérisé en ce que** le processeur de connexion (11) est prévu pour recevoir de l'appelant (1) par le système d'entrée (12), un signal appelant comportant un signal d'identification qui identifie l'appelant (1) sur la base dudit nom unique, et
le processeur de connexion (11) est de plus prévu pour recevoir, à ladite identification du nom unique, les paramètres associés à l'appelant de la base de données si l'appelant est présent dans la base de données (14, 19), **caractérisé en ce que** les paramètres comprennent des paramètres d'authentification sous forme d'une ID utilisateur et d'un log-on utilisateur de l'appelant (1), qui sont nécessaires pour avoir accès à l'appelé (8).

2. Dispositif selon la revendication 1, **caractérisé en ce que** le processeur de connexion (11) est prévu pour charger les paramètres d'authentification de la base de données (19) immédiatement à ladite identification du nom unique, et transférer les paramètres d'authentification à l'appelé (8).

3. Dispositif selon la revendication 1, **caractérisé en ce que** le processeur de connexion (11) est adaptable à différents types d'éléments de connexion (3) de l'appelant (1).

4. Dispositif selon la revendication 3, **caractérisé en ce que** les paramètres sont associés à l'élément de connexion de l'appelant (1).

5. Dispositif selon la revendication 4, **caractérisé en ce que** l'élément de connexion (3) de l'appelant (1) comporte un modem.

6. Dispositif selon la revendication 5, **caractérisé en ce que** ledit nombre de paramètres comprend des paramètres concernant la structure, la fonction et/ou la qualité de l'élément de connexion (3) de l'appelant (1).

7. Dispositif selon la revendication 6, **caractérisé en ce que** ledit nombre de paramètres comporte au moins l'un de la vitesse de transmission des données, du type de compression des données et du mode de correction d'erreur de l'élément de connexion (3) de l'appelant (1).

8. Dispositif selon l'une des revendications **5** à **7, caractérisé en ce que** le processeur de connexion (11) comporte un élément modem (18) et est prévu pour adapter l'élément modem (18) au modem (3) de l'appelant (1) sur la base des paramètres.

9. Dispositif selon la revendication 8, **caractérisé en ce que** le processeur de connexion (11) est prévu pour transférer les paramètres d'authentification pendant ladite adaptation de l'élément modem (18).

10. Dispositif selon l'une des précédentes revendications, **caractérisé en ce que** le processeur de connexion (11) est prévu pour recevoir les paramètres associés à l'appelant de l'appelant si l'appelant (1) n'est pas présent dans la base de données (1), ainsi que les paramètres associés à la base de données (14, 19).

11. Dispositif selon l'une des précédentes revendications, **caractérisé en ce que** l'appelé (8) comporte un fournisseur d'internet (9).

12. Dispositif selon l'une des précédentes revendications, **caractérisé en ce que** le processeur de connexion (11) comprend un moyen (16) prévu pour identifier l'appelant (1) sur la base dudit signal d'identification.

13. Dispositif selon l'une des précédentes revendications, **caractérisé en ce que** le système d'entrée (12) est prévu pour être connecté à l'élément de connexion (3) de l'appelant par un réseau (4) ayant un moyen (7) pour envoyer ledit signal d'identification.

14. Procédé pour établir une connexion de télécommunication numérique entre un appelant et un appelé au moyen d'un système de connexion ayant une base de données pour mémoriser un nom unique d'un appelant avec un certain nombre de paramètres nécessaires pour la connexion et l'accès à l'appelé, qui sont associés à l'appelant, **caractérisé en ce que** le procédé comprend les étapes de :
réception par le système de connexion d'un signal d'appel de l'appelant, ledit signal comprenant le nom unique de l'appelant ;
identification de l'appelant par le nom unique ;
recherche du nom unique de l'appelant dans la base de données ;
chargement desdits paramètres associés à l'appelant ; et
établissement de ladite connexion entre l'appelant et l'appelé au moyen des paramètres, ledit établissement comprend l'adaptation du système de connexion à un élément de connexion de l'appelant (1) au moyen des paramètres, **caractérisé en ce que** les paramètres comprennent des paramètres d'authentification sous forme d'une ID utilisateur et d'un log-on de l'utilisateur de l'appelant, qui sont nécessaires pour avoir accès à l'appelé.

15. Procédé selon la revendication 14, comportant les étapes de : chargement des paramètres d'authentification de la base de données immédiatement à ladite identification du nom unique, et transfert des paramètres d'authentification à l'appelé.

16. Procédé selon la revendication 15, **caractérisé en ce que** les paramètres d'authentification sont transférés pendant ladite adaptation du dispositif de connexion.

17. Procédé selon l'une des revendications 14 et 16, comprenant l'étape de chargement desdits paramètres associés à l'appelant à partir de la base de données si l'appelant est présent dans la base de données.

18. Procédé selon l'une des revendications 14 à 17, comprenant l'étape ultérieure de transfert desdits paramètres associés à l'appelant de l'appelant à la base de données si l'appelant n'est pas présent dans la base de données.
